# EUROPEAN PATENT SPECIFICATION

(11) **EP 3 843 536 B1**
(45) Date of publication and mention of the grant of the patent: **10.08.2022**
(21) Application number: 19737679.1
(22) Date of filing: 28.06.2019
(51) Int. Cl.: A01G 31/06

(54) **A PLANT GROWING CABINET WITH IMPROVED WATERING ALGORITHM**
PFLANZENWACHSTUMSSCHRANK MIT VERBESSERTEM BEWÄSSERUNGSALGORITHMUS
ARMOIRE DE CULTURE AVEC ALGORITHME D'ARROSAGE AMÉLIORÉ

(30) Priority: 31.08.2018 TR 201812459
(43) Date of publication of application: 07.07.2021
(73) Proprietor: Arçelik Anonim Sirketi, 34445 Istanbul (TR)
(72) Inventor: SARIKAYA, Ersin, 34950 Istanbul (TR); BAKYUZ, Murat, 34950 Istanbul (TR); TUYSUZ, Seckin, 34950 Istanbul (TR); KARAKAYA, Erkan, 34950 Istanbul (TR); APAYDIN, Tolga, 34950 Istanbul (TR)
(86) International application number: PCT/EP2019/067436
(87) International publication number: WO 2020/043355

(56) References cited:
- CN-U- 205 018 017
- US-A1- 2006 254 138

## Description

The present invention relates to a plant growing cabinet, in particular to a plant growing cabinet having improved watering algorithm.

Hydroponic cultivation is a method of agriculture based on growing plants without soil, and depends on the principle of feeding the plant with necessary water and the nutrients to the root environment in required amounts, and is practiced in water or solid medium culture. The plants to be grown in soilless agriculture applications are grown in an enclosed plant growing cabinet wherein levels of water, light, humidity and carbon dioxide density has a significant part in growing the plant. During growth of a plant, all these elements are optimized according to the plant's growth phase, and thus the plant is enabled to grow more rapidly and is protected from harmful outer environmental elements (e.g. high levels of humidity, light intensity). During watering of the plants, water that is stored inside the water tank is pumped via a pump and a coupling through a water conduit in to the growing trays. The amount of water to be transferred to the growing trays is vital as lack of water may cause the plants to dry and similarly pumping more water than required may cause the roots of the plants to rot. Therefore, it is very important to pump appropriate amount of water to the growing trays in a cost effective way and without a need for user interaction.

A prior art publication in the technical field of the present invention may be referred to as CN107836343A among others, the document disclosing a aeroponic system for the cultivation of plants having a water level sensor to monitor the liquid level in the nutrient tank. Another prior art document CN205018017U discloses an intelligence water planting vegetable planting cabinet, including a plurality of planting layers, water circulating system, and control system. Prior art document US2006254138A1 discloses smart garden devices and methods for growing plants by measuring liquid or nutrient usage rate.

A common problem with the prior art plant growing cabinets is that the water inside the water tank is pumped to the growing trays does not depend on the humidity level of the turf mixture inside the said growing trays. Some plants may need more water, therefore the soil of said plants may dry out before the next watering. On the other hand, some plants may need less water, therefore the already humid soil of said plants may be re- watered causing the roots of the plants to rot.

An objective of the present invention is to provide a plant growing cabinet suitable for watering the turf mixture inside the growing trays according to the watering needs of the plants in a cost effective way.

The method realized to achieve the aim of the present invention and disclosed in the first claim and the dependent claims comprises a plant growing cabinet having a body wherein at least a growing unit is placed. The growing units are placed inside the body in vertical direction. The growing trays are placed inside the growing units after being filled with turf mixture in which the plants are planted. Water or liquid solution stored inside the water tank is pumped via a pump and through an irrigation line to the growing units. Meanwhile a drain line connected to the growing units via a drain hole transfers the water back to the water tank. Drain line and irrigation line are provided separate from each other. By this means, during watering, water is pumped to the growing tray continuously and discharged back towards the water tank. The water transferred to the growing unit is more than the drain line can drain back to the water tank, therefore the water level inside the growing unit rises and after a certain time the water starts to enter the growing tray via perforations at its bottom. A sensor is provided inside the water tank to measure and transmit the water level to the control unit which in turn calculates the rate of change of the water level. The control unit also decides on when to start the watering procedure. Upon starting the watering, the control unit compares the rate of change of water level inside the water tank to a value predetermined by the manufacturer and keeps the pump active as long as the rate of change is greater or equal to the value predetermined by the manufacturer and deactivates the pump if the rate of change is smaller than the value predetermined by the manufacturer. As a result of this, the costly method of use of humidity sensors in growing trays becomes obsolete providing cost advantage for the user. Another advantage of the present invention is the prevention of the turf mixture to be dried out or overwatered which causes harm to the plants by an autonomous system eliminating human interference.

A separator is placed inside the water tank so as to divide the water tank into two smaller sub volumes in a slidably and watertight manner. The pump and the sensor are located inside the same sub volume. During watering, only a minor part of the water inside the water tank is used. Therefore, the rate of change of the water level differs slightly making detection of the level change harder. This also decreases sensitivity of the measurements. The user may slide the separator towards the pump and the sensor therefore obtaining a smaller volume of water which upon being pumped has a higher rate of change of water level. In the case of the water tank being full, the user may slide the separator so as to divide the water tank into smaller sub volumes. By this means, the sensitivity of the sensor is increased.

In another embodiment of the present invention, a motor is used to move the separator along the water tank. The control unit according to the data provided from the sensor may activate the motor so as to collect the remaining the water inside the water tank to a smaller volume therefore using all the water inside the water tank and also increasing sensitivity of the sensor. In the case of the water tank being full, the control unit may activate the motor so as to divide the water tank into smaller sub volumes achieving the result of increased sensitivity for the sensor. Motor also provides autonomous operation for the plant growing cabinet eliminating the need for human interference.

In another embodiment of the present invention, the control unit keeps the pump inert as long as the motor is activated. Therefore, the problem of detection water level changes caused by simultaneous operation of the pump and motor is prevented.

In another embodiment of the present invention, the control unit calculates the rate of change at most every 0.5 seconds.

In another embodiment of the present invention, the control unit calculates the rate of change at every 0.1 seconds.

In another embodiment of the present invention, the control unit stores watering needs of growing trays having different volumes. The user may select from a display provided on the body to identify the growing trays being used. Therefore operational flexibility is achieved.

In another embodiment of the present invention, the control unit stores watering needs of different plant species. The user may select from the display provided on the body to identify the plant species being planted. Therefore operational flexibility is achieved.

In another embodiment of the present invention, the water tank has an oblong and elongated shape. The width being smaller than the height of the water tank.

In another embodiment of the present invention, the water tank has a width to height ratio equal or smaller than 0,2.

By means of the present invention, a plant growing cabinet watering the growing trays according to the rate of change of the water level inside the water tank that is calculated by the control unit using the water level data provided by the sensor is achieved, making costly sensors to be used in every growing tray obsolete while eliminating the possibility of the turf mixture to be dried out or overwatered.

The drawings are not meant to delimit the scope of protection as identified in the claims nor should they be referred to alone in an effort to interpret the scope identified in the claims without recourse to the technical disclosure in the description of the present invention.
Figure 1 - is a schematic side view of the plant growing cabinet
Figure 2 - is a side view of the water tank
Figure 3 - is a side view of the growing unit and the growing tray

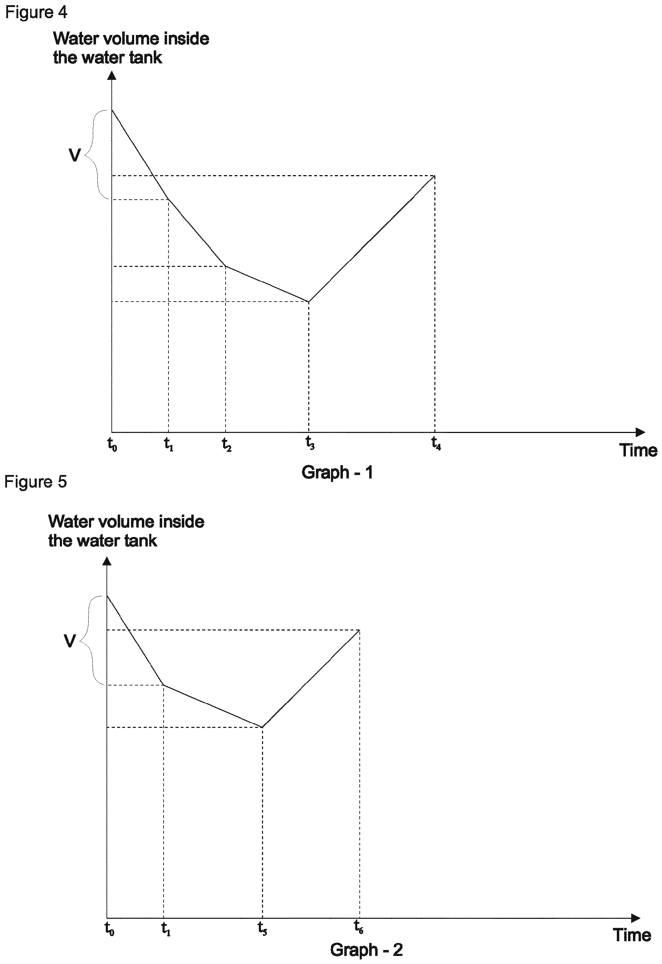

Figure 4 - is a graph of volume of water inside the sub volume wherein the pump is located during watering of dry turf mixture
Figure 5 - is a graph of volume of water inside the sub volume wherein the pump is located during watering of humid turf mixture

The following numerals are assigned to different parts demonstrated in the drawings and referred to in the present detailed description of the invention:
- 1.: Plant growing cabinet
- 2.: Body
- 3.: Growing unit
- 4.: Growing tray
- 5.: Water tank
- 6.: Pump
- 7.: Sensor
- 8.: Control unit
- 9.: Separator
- 10.: Motor

The present invention relates to a plant growing cabinet (1) comprising; a body (2) in which at least one growing unit (3) is placed, a growing tray (4) in which the turf mixture enabling the plants to grow is placed and wherein the growing tray (4) is placed on to the growing unit (3) forming a volume (V) in between the growing unit (3) and the growing tray (4), a water tank (5) inside the body (2), a pump (6) to pump the water from the water tank (5) to the growing tray (4), a sensor (7) to detect the water level inside the water tank (5), a control unit (8) configured to activate the pump (5) on predetermined time intervals to transfer the water from the water tank (5) to the growing tray (4) and wherein the control unit (8) is in communication with the sensor (7).

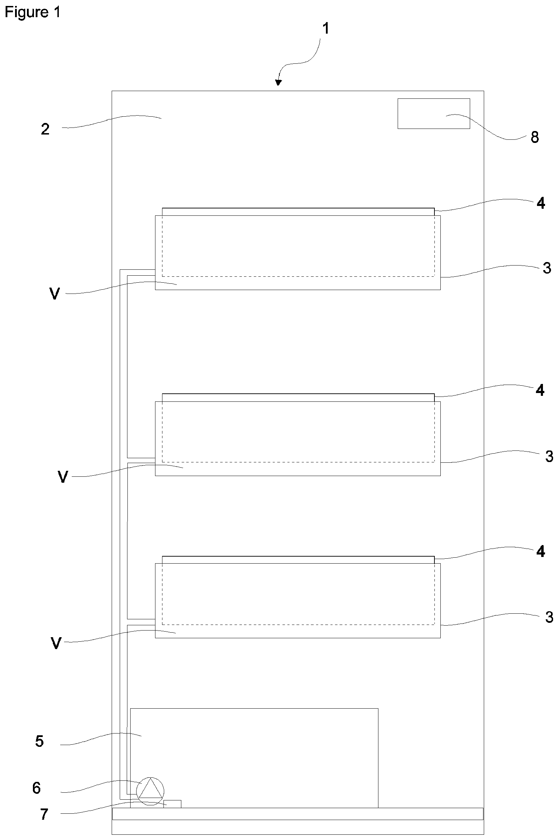

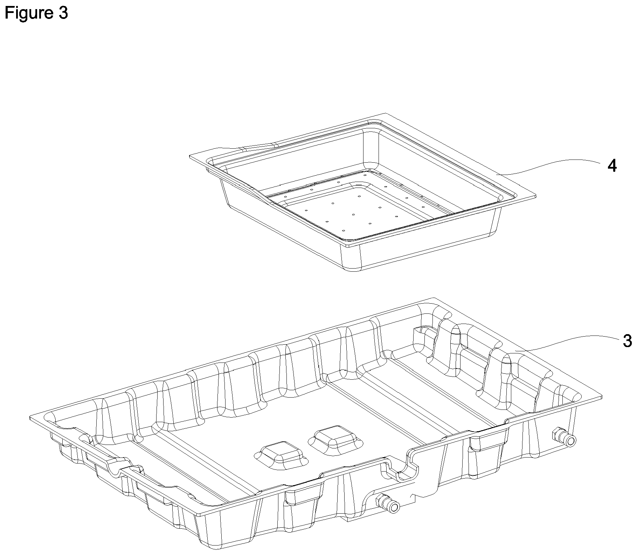

The present invention relates to a plant growing cabinet (1) comprising; the control unit (8) configured to calculate and compare the rate of change of water level inside the water tank (5) to a rate predetermined by the manufacturer via the water level data measured by the sensor (7) and; keep the pump (6) active for a time interval wherein the rate of change of the water level inside the water tank (5) is equal or greater than said rate predetermined by the manufacturer, deactivate the pump (6), should the rate of change of the water level inside the water tank (5) falls under the said rate predetermined by the manufacturer. The watering procedure in the case of dry turf mixture consists of four different phases. The control unit (8) depending on the watering needs of the species planted inside the growing tray (4) initiates phase-1 (time=t₀) by activating the pump (6) so as to start the watering. Upon activation of the pump (6), the water starts to flow through an irrigation line and to the growing unit (3). A drain hole, connected to a drain line is provided at the bottom of the growing unit (3) and continuously drains water back to the water tank (5). The water transferred to the growing unit (3) is more than the drain line can drain back to the water tank (5). Therefore, the water level inside the growing unit (3) gradually increases filling the volume (V) between the growing unit (3) and the growing tray (4). The water drained back to the water tank (5) increases differentially as the water level thus the pressure applied to the drain hole increases inside the growing unit (3). The phase-1 ends (time= t₁) as the water starts to enter the growing tray (4) through multiple perforations provided at its base. The phase-2 starts with the water being absorbed by the turf mixture thus the rate of change of the water level inside the growing unit (3) decreases. Although the pressure applied to the drain hole keeps increasing, the rate of increase slows down therefore the rate of water drained back to the water tank (5), although the volume per unit time is increasing, decreases. The control unit (8) according to the data provided by the sensor (7) measures these changes. The phase-2 continues for a duration (time = t₂-t₁) that the turf mixture is able to absorb water. During phase-1 and the phase-2 the rate of change of the water level inside the water tank (5) is equal or greater than a value predetermined by the manufacturer. The phase-3 starts with (time = t₂) the turf mixture being saturated by water. The water level inside the growing unit (3) increases differentially after the turf mixture is saturated thus the water drained back to the water tank (5). At this point, due to high water level and pressure inside the growing tray (4), most of the water in drained back to the water tank (5). As a result, the rate of change of the water level inside the water tank (5) falls under the value predetermined by the manufacturer. The control unit (8) deactivates the pump (6) (time= t₃). During last phase, the phase-4, the pump (6) remains inert and the water inside the growing unit (4) is allowed to drain back to the water tank (5) freely, leaving no standing water inside the growing unit (3) (time= t₄). (Figure 1,3 and Graph 1)

The watering procedure in the case of humid turf mixture consists of three different phases. The phase-1 (time=t₀) remains identical with the previous case. Meaning that the volume (V) between the growing tray (4) and the growing unit (3) is gradually filled. The rate of change is equal to the case wherein the turf mixture was dry. During phase-2 (time interval t₁ - t₅), the water enters the growing tray (4) through perforations. The already humid turf mixture cannot absorb as much water as the dry turf mixture. Therefore, the rate of change of level of water inside the growing tray (4) will be higher. This in turn effects the water pressure applied to the drain hole thus the water transferred back to the water tank (5). Therefore, the rate of change of the water inside the water tank (5) falls under the value predetermined by the manufacturer. As a result, the control unit (8) deactivates the pump (6) initiating phase-3 (time interval t₅ - t₆) wherein the water is allowed to drain back to the water tank (5) freely, leaving no standing water inside the growing unit (4). By this means, a plant growing cabinet (1) having improved watering algorithm is achieved, preventing the turf mixture to be dried out or overwatered which is highly detrimental to the plants being grown. (Figure 1, 3 and Graph 2)

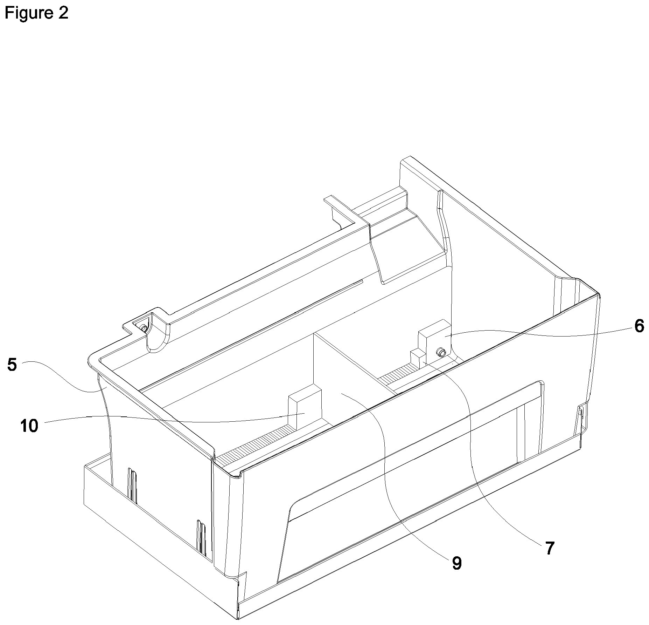

A separator (9) is slidably and watertightly placed inside the water tank (5) to divide the water tank (5) into two smaller volume along its height and depth, the pump (5) and the sensor (7) being located inside the same volume. Upon sliding the separator (9) water will be collected towards the side the separator (9) is being slid. Excess water overflows the separator (9). The sensor (7) is a pressure sensor calculating the pressure of the water column above it. Due to the large volume the water tank (5) has, the water pumped to the growing unit (3) creates a small level change inside the water tank (5) decreasing the sensitivity of the sensor (7). By fixing the separator (9) close to the pump (6) and the sensor (7) a smaller volume of water is isolated. As a result, water level changes inside the water tank (5) becomes easier to be measured therefore the operational sensitivity of the control unit (8) is improved. (Figure 2)

In an embodiment, the control unit (8) configured to activate a motor (10) inside the water tank (5) to slide the separator (9) along the water tank (5). The control unit (8) activates the motor (10) and moves the separator (9) closer to the pump (6) and the sensor (7) isolating a smaller volume of water which increases the operational sensitivity of the control unit (8). Additionally, the separator (9) is also used to limit the remaining water inside the water tank (5) to a smaller volume. Therefore, all the water inside the plant growing cabinet (1) is used minimizing the user interference. (Figure 2)

In an embodiment, the control unit (8) is configured to keep the pump (6) inactive during the activation of the motor (10). Activation of the pump (6) and the motor (10) so as to slide the separator (9) effects the water level and its rate of change and therefore must be prevented.

In an embodiment, the control unit (8) is calculating the rate of change of the water level inside the water tank (5) at most every 0.5 seconds. The water level change is calculated by the control unit (8) at most every 0.5 seconds therefore providing a sensitive calculation.

In another embodiment, the control unit (8) calculating the rate of change of the water level inside the water tank (5) at every 0.1 seconds. The water level change is calculated by the control unit (8) at every 0.1 seconds therefore providing a sensitive calculation.

In another embodiment, the control unit (8) is configured to store watering needs of growing trays (4) having different volumes and shapes. As a result, different growing trays (4) suitable for different applications can be used inside the same growing unit (3) providing flexibility in use for the user.

In another embodiment, the control unit (8) configured to store watering needs of different plant species thereby activating the pump on said predetermined time intervals. Therefore, same control unit (8) can be used for different plant species creating added value for the user.

In another embodiment, the water tank (5) has an elongated shape the width being smaller than the height. An elongated shape provides further sensitivity in measuring level change of the water inside the water tank (5), providing operational sensitivity of the control unit (8).

In another embodiment, the water tank (5) has a width to height ratio equal or smaller than 0,2. Multiple growing units (3) are provided in vertical direction with the water tank (5) extending along their sides therefore providing efficient use of limited internal space of the plant growing cabinet (1) Additionally, a narrow water tank (5) provides higher sensitivity in measuring the rate of change of the water inside the water tank (5).

In another embodiment, the sensor (7) is a barometric sensor formed in the shape of a tube and partially immersed inside the water, upper side being enclosed trapping air inside. Upon activation of the pump (6), the water level inside the water tank (4) starts to descend. As a result, the water level inside the tube shaped sensor (7) descends creating a change in pressure value of the air trapped inside. The pressure of air is measured therefore a precise estimation of the water level inside the water tank (4) is achieved.

In the plant growing cabinet (1) of the present invention, a watering algorithm minimizing the user interference is achieved by using a sensor (7) provided inside the water tank (5) to measure and transmit the water level. A control unit (8), connected to the sensor (7), calculates the rate of change of the water level upon activation of the pump (6) and decides on watering needs of the plants by eliminating the possibility of the turf mixture to be dried out or overwatered in an economical and cost effective way.

## Claims

1. A plant growing cabinet (1) comprising;
a body (2) in which at least one growing unit (3) is placed,
a growing tray (4) in which a mixture enabling the plants to grow is placed and wherein the growing tray (4) is placed on to the growing unit (3) forming a volume (V) in between the growing unit (3) and the growing tray (4),
a water tank (5) inside the body (2),
a pump (6) to pump the water from the water tank (5) to the growing tray (4),
a drain line connected to the growing unit (3) via a drain hole for transferring the water back to the water tank (5),
a sensor (7) to detect the water level inside the water tank (5),
a control unit (8) configured to activate the pump (5) on predetermined time intervals to transfer the water from the water tank (5) to the growing tray (4) and wherein the control unit (8) is in communication with the sensor (7) **characterized in that**,
said mixture is a turf mixture, the control unit (8) is configured to calculate and compare the rate of change of water level inside the water tank (5) to a rate predetermined by the manufacturer via the water level data measured by the sensor (7) and
- keep the pump (6) active for a time interval wherein the rate of change of the water level inside the water tank (5) is equal or greater than said rate predetermined by the manufacturer,
- deactivate the pump (6), should the rate of change of the water level inside the water tank (5) falls under the said rate predetermined by the manufacturer,
wherein the plant growing cabinet (1) further comprises a separator (9) slidably and watertightly placed inside the water tank (5) to divide the water tank (5) into two smaller volumes along its height and depth, the pump (6) and the sensor (7) being located inside the same volume.

2. A plant growing cabinet (1) according to claim 1, **characterized by** the control unit (8) configured to activate a motor (10) inside the water tank (5) to slide the separator (9) along the water tank (5).

3. A plant growing cabinet (1) according to claim 2, **characterized by** the control unit (8) configured to keep the pump (6) inactive during the activation of the motor (10).

4. A plant growing cabinet (1) according to any one of the preceding claims, **characterized by** the control unit (8) calculating the rate of change of the water level inside the water tank (5) at most every 0.5 seconds.

5. A plant growing cabinet (1) according to any one of the preceding claims, **characterized by** the control unit (8) calculating the rate of change of the water level inside the water tank (5) at every 0.1 seconds.

6. A plant growing cabinet (1) according to any one of the preceding claims, **characterized by** the control unit (8) configured to store watering needs of plant growing trays (5) having different volumes and shapes.

7. A plant growing cabinet (1) according to any one of the preceding claims, **characterized by** the control unit (8) configured to store watering needs of different plant species thereby activating the pump on said predetermined time intervals..

8. A plant growing cabinet (1) according to any one of the preceding claims, **characterized by** the water tank (5) having an elongated shape the width being smaller than the height.

9. A plant growing cabinet (1) according to any one of the preceding claims, **characterized by** the water tank (5) having a width to height ratio equal or smaller than 0,2.

10. A plant growing cabinet (1) according to any one of the preceding claims, **characterized by** the sensor (7) being a barometric sensor formed in the shape of a tube and partially immersed inside the water, upper side being enclosed trapping air inside.

## Patentansprüche

1. Ein Pflanzenzuchtschrank (1) **umfasst**
einen Körper (2), in dem mindestens eine Wachstumseinheit (3) angeordnet ist,
eine Anzuchtschale (4), in die eine Mischung gegeben wird, die das Wachstum der Pflanzen ermöglicht, wobei die Anzuchtschale (4) auf die Wachstumseinheit (3) aufgesetzt wird, wodurch ein Volumen (V) zwischen der Wachstumseinheit (3) und der Anzuchtschale (4) gebildet wird.
einen Wassertank (5) innerhalb des Körpers (2),
eine Pumpe (6) zum Pumpen des Wassers aus dem Wassertank (5) in die Anzuchtschale (4),
eine Ablaufleitung, die über ein Ablaufloch mit der Wachstumseinheit (3) verbunden ist, um das Wasser zurück in den Wassertank (5) zu leiten,
einen Sensor (7) zum Erfassen des Wasserstands im Wassertank (5),
eine Steuereinheit (8), die dazu konfiguriert ist, die Pumpe (5) in vorbestimmten Zeitintervallen zu aktivieren, um das Wasser von dem Wassertank (5) zu der Anzuchtschale (4) zu übertragen, wobei die Steuereinheit (8) mit dem Sensor (7) in Verbindung steht und wobei die Steuereinheit (8) mit dem Sensor (7) in Verbindung steht und **dadurch gekennzeichnet ist, dass** die Mischung eine Rasenmischung ist, die Steuereinheit (8) ist dazu konfiguriert, die Änderungsrate des Wasserstands innerhalb des Wassertanks (5) zu berechnen und mit einer vom Hersteller vorgegebenen Rate über die von dem Sensor (7) gemessenen Wasserstandsdaten zu vergleichen und
- die Pumpe (6) für ein Zeitintervall aktiv zu halten, in dem die Änderungsrate des Wasserstands im Wassertank (5) gleich oder größer als die vom Hersteller vorgegebene Rate ist,
- die Pumpe (6) abzuschalten, wenn die Änderungsgeschwindigkeit des Wasserspiegels im Wasserbehälter (5) unter die vom Hersteller vorgegebene Geschwindigkeit fällt,
wobei der Pflanzenzuchtschrank (1) ferner einen Separator (9) umfasst, der verschiebbar und wasserdicht innerhalb des Wassertanks (5) angeordnet ist, um den Wassertank (5) entlang seiner Höhe und Tiefe in zwei kleinere Volumina zu unterteilen, wobei sich die Pumpe (6) und der Sensor (7) im gleichen Volumen befinden.

2. Ein Pflanzenzuchtschrank (1), wie in Anspruch 1 aufgeführt, **ist dadurch gekennzeichnet, dass** die Steuereinheit (8) so konfiguriert ist, dass sie einen Motor (10) innerhalb des Wassertanks (5) aktiviert, um den Separator (9) entlang des Wassertanks (5) zu verschieben.

3. Ein Pflanzenzuchtschrank (1), wie in Anspruch 2 aufgeführt, **ist dadurch gekennzeichnet, dass** die Steuereinheit (8) so konfiguriert ist, dass sie die Pumpe (6) während der Aktivierung des Motors (10) inaktiv hält.

4. Ein Pflanzenzuchtschrank (1), wie in einem der vorherigen Ansprüchen aufgeführt, **ist dadurch gekennzeichnet, dass** die Steuereinheit (8) die Änderungsrate des Wasserstands innerhalb des Wassertanks (5) höchstens alle 0,5 Sekunden berechnet.

5. Ein Pflanzenzuchtschrank (1), wie in einem der vorherigen Ansprüchen aufgeführt, **ist dadurch gekennzeichnet, dass** die Steuereinheit (8) die Änderungsrate des Wasserpegels im Inneren des Wassertanks (5) alle 0,1 Sekunden berechnet.

6. Ein Pflanzenzuchtschrank (1), wie in einem der vorherigen Ansprüchen aufgeführt, **ist dadurch gekennzeichnet, dass** die Steuereinheit (8) so konfiguriert ist, dass sie den Bewässerungsbedarf von Pflanzenzuchtschalen (5) mit unterschiedlichen Volumina und Formen speichert.

7. Ein Pflanzenzuchtschrank (1), wie in einem der vorherigen Ansprüchen aufgeführt, **ist dadurch gekennzeichnet, dass** die Steuereinheit (8) so konfiguriert ist, dass sie den Bewässerungsbedarf verschiedener Pflanzenarten speichert, wodurch die Pumpe in den vorbestimmten Zeitintervallen aktiviert wird.

8. Ein Pflanzenzuchtschrank (1), wie in einem der vorherigen Ansprüchen aufgeführt, **ist dadurch gekennzeichnet, dass** der Wassertank (5) eine längliche Form hat, wobei dessen Breite kleiner als die Höhe ist.

9. Ein Pflanzenzuchtschrank (1), wie in einem der vorherigen Ansprüchen aufgeführt, **ist dadurch gekennzeichnet, dass** der Wassertank (5) ein Breiten-zu-Höhen-Verhältnis gleich oder kleiner als 0,2 hat.

10. Ein Pflanzenzuchtschrank (1), wie in einem der vorherigen Ansprüchen aufgeführt, **ist dadurch gekennzeichnet, dass** der Sensor (7) ein barometrischer Sensor ist, der in Form eines Rohres ausgebildet ist und teilweise in das Wasser eingetaucht ist, wobei die obere Seite eingeschlossen ist und Luft darin einschließt.

## Revendications

1. Une armoire de culture végétale (1) comprenant ;
un corps (2) dans lequel au moins une unité de culture (3) est placée,
une palette de culture (4) dans laquelle un mélange permettant aux plantes de pousser est placé, dont la palette de culture (4) est placée sur l'unité de culture (3) formant un volume (V) entre l'unité de culture (3) et la palette de culture (4),
un réservoir d'eau (5) à l'intérieur du corps (2),
une pompe (6) pour pomper l'eau du réservoir d'eau (5) vers la palette de culture (4), un conduit de drainage relié à l'unité de culture (3) à travers un trou d'évacuation pour renvoyer l'eau au réservoir d'eau (5),
un capteur (7) pour détecter le niveau d'eau à l'intérieur du réservoir d'eau (5),
une unité de commande (8) configurée pour activer la pompe (5) à des intervalles de temps prédéterminés pour transférer l'eau du réservoir d'eau (5) vers la palette de culture (4) et dont l'unité de commande (8) est en communication avec le capteur (7) **caractérisé en ce que** ledit mélange est un mélange terreux,
l'unité de commande (8) est configurée de manière à calculer et comparer le taux de variation du niveau de l'eau se trouvant à l'intérieur du réservoir d'eau (5) par rapport à un taux prédéterminé par le fabricant, via les données de niveau d'eau mesurées par le capteur (7) et
- maintenir la pompe (6) active pendant un intervalle de temps où le taux de variation du niveau de l'eau se trouvant à l'intérieur du réservoir d'eau (5) est égal ou supérieur audit taux prédéterminé par le fabricant,
- désactiver la pompe (6), si le taux de variation du niveau de l'eau se trouvant à l'intérieur du réservoir d'eau (5) tombe en dessous dudit taux prédéterminé par le fabricant,
dans lequel l'armoire de culture végétale (1) comprend, en outre, un séparateur (9) placé de manière coulissante et étanche à l'intérieur du réservoir d'eau (5) afin de diviser le réservoir d'eau (5) en deux volumes plus petits le long de sa hauteur et de sa profondeur, la pompe (6) et le capteur (7) étant situés à l'intérieur du même volume.

2. Un armoire de culture végétale (1) selon la revendication 1, **caractérisé par** l'unité de commande (8) configurée de manière à activer un moteur (10) à l'intérieur du réservoir d'eau (5) pour glisser le séparateur (9) le long du réservoir d'eau (5).

3. Une armoire de culture végétale (1) selon la revendication 2, **caractérisé par** l'unité de commande (8) configurée de manière à maintenir la pompe (6) inactive pendant l'activation du moteur (10).

4. Un armoire de culture végétale (1) selon l'une quelconque des revendications précédentes, **caractérisé par** l'unité de commande (8) calculant le taux de variation du niveau de l'eau se trouvant à l'intérieur du réservoir d'eau (5) au maximum toutes les 0,5 secondes.

5. Un armoire de culture végétale (1) selon l'une quelconque des revendications précédentes, **caractérisé par** l'unité de commande (8) calculant la vitesse de variation du niveau de l'eau se trouvant à l'intérieur du réservoir d'eau (5) toutes les 0,1 secondes.

6. Une armoire de culture végétale (1) selon l'une quelconque des revendications précédentes, **caractérisé par** l'unité de commande (8) configurée de manière à mémoriser les besoins en eau des palettes de culture (5) ayant des volumes et des formes différents.

7. Un armoire de culture végétale (1) selon l'une quelconque des revendications précédentes, **caractérisé par** l'unité de commande (8) configurée de manière à mémoriser les besoins en eau de différentes espèces végétales activant ainsi la pompe sur lesdits intervalles de temps prédéterminés.

8. Une armoire de culture végétale (1) selon l'une quelconque des revendications précédentes, **caractérisé par** le réservoir d'eau (5) ayant une forme allongée, la largeur étant inférieure à la hauteur.

9. Une armoire de culture végétale (1) selon l'une quelconque des revendications précédentes, **caractérisé par** le réservoir d'eau (5) ayant un rapport largeur sur hauteur égal ou inférieur à 0,2.

10. Un armoire de culture végétale (1) selon l'une quelconque des revendications précédentes, **caractérisé par** le capteur (7) étant un capteur barométrique se présentant sous la forme d'un tube et de manière partiellement immergé dans l'eau, la partie supérieure étant fermée, maintenant l'air à l'intérieur.
